# EUROPEAN PATENT APPLICATION

(11) **EP 4 717 742 A1**
(43) Date of publication of application: **01.04.2026**
(21) Application number: 25200986.5
(22) Date of filing: 09.09.2025
(51) Int. Cl.: C09D 11/38, C09D 11/102, C09D 11/322, C09D 11/107, C09D 11/326

(54) **INKJET INK**

(30) Priority: 26.09.2024 JP 2024167722
(71) Applicant: KYOCERA Document Solutions Inc., Osaka-shi, Osaka 540-8585 (JP)
(72) Inventor: OZAWA, Noriaki, Osaka-shi, Osaka, 540-8585 (JP)
(74) Representative: Viering, Jentschura & Partner mbB Patent- und Rechtsanwälte

(57) **Abstract**

An inkjet ink includes: a pigment; a pigment dispersion resin; a surfactant represented by the following general formula (1); a diol having 3 or more and 5 or less carbon atoms; and water. A mass ratio of the pigment dispersion resin to the pigment is 0.5 or more and 1.1 or less. 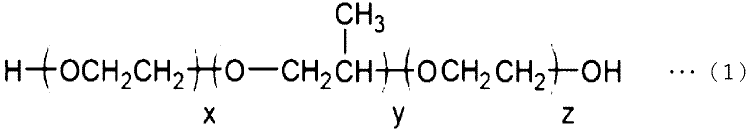 (In the general formula (1), x, y, and z each represent an integer determined such that a ratio of a number average molecular weight of only propyleneoxide chains in the surfactant to a number average molecular weight of the surfactant is 0.85 or more and 0.91 or less)

## Description

### Field

The present disclosure relates to an inkjet ink.

### Background

Japanese Patent Application Laid-open No. 2010-024313 and Japanese Patent Application Laid-open No. 2011-236424 each disclose an inkjet ink for recording an image on a recording medium such as paper. Inkjet inks are desired to form high-quality images without unevenness on recording media. Meanwhile, inkjet inks are also desired to have high dispersion stability for maintaining the dispersed state of pigments in a solvent.

### Summary

According to an embodiment of the present disclosure, there is provided an inkjet ink, including: a pigment; a pigment dispersion resin; a surfactant represented by the following general formula (1); a diol having 3 or more and 5 or less carbon atoms; and water. A mass ratio of the pigment dispersion resin to the pigment is 0.5 or more and 1.1 or less. 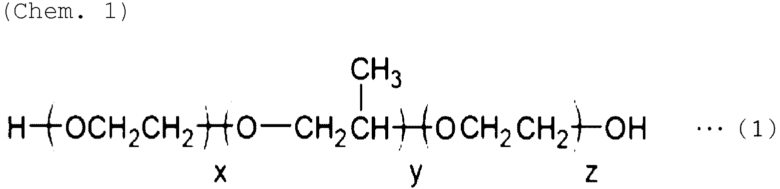 (In the general formula (1), x, y, and z each represent an integer determined such that a ratio of a number average molecular weight of only propyleneoxide chains in the surfactant to a number average molecular weight of the surfactant is 0.85 or more and 0.91 or less)

### Detailed Description

Inkjet inks are desired to have a certain degree of wet-spreading property on recording media for forming images without unevenness on recording media. That is, in inkjet inks, opposing pigment behavior is desired on the recording medium and in the solvent in order to achieve both image quality and dispersion stability of pigments.

In view of the circumstances as described above, it is an object of the present disclosure to provide an inkjet ink capable of achieving both image quality and dispersion stability of pigments.

An embodiment of the present disclosure will be described.

### [Configuration of ink]

### (Schematic configuration)

An inkjet ink according to an embodiment of the present disclosure (hereinafter, referred to simply as an "ink") includes: a pigment a; a pigment dispersion resin b; a surfactant c; a water-soluble moisturizing agent d; and water. The ink according to this embodiment is a water-based ink that is ejected from a recording head of an inkjet recording apparatus onto a recording medium to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.

In the ink according to this embodiment, the synergistic effect of the combination of the pigment dispersion resin b, the surfactant c, and the water-soluble moisturizing agent d allows the quality of an image formed on the recording medium and the dispersion stability of the pigment a in the solvent to be realized. Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

### (Pigment dispersion resin b)

In the ink according to this embodiment, the pigment dispersion resin b that is fine particles of a resin is blended as a dispersant that is adsorbed on the surface of the pigment a to enhance the dispersibility of the pigment a in the solvent. Examples of the pigment dispersion resin b suitable for the ink according to this embodiment include a benzylmethacrylate/methacrylic acid copolymer, a benzylmethacrylate/acrylic acid copolymer, a styrene/methacrylic acid copolymer, a styrene/acrylic acid copolymer, and a urethane resin. Of these, a benzylmethacrylate/methacrylic acid copolymer is favorable.

The pigment dispersion resin b favorably has a molecular weight of approximately several tens of thousands. In the pigment dispersion resin b, from the viewpoints of improving the dispersibility of the pigment a in the solvent, micronization, and improving the color development/coloration power by the pigment a, the acid value is favorably 150 mg KOH/g or more. Meanwhile, in the pigment dispersion resin b, from the viewpoint of improving the preservation stability of the ink, the acid value is favorably 300 mg KOH/g or less.

In the ink according to this embodiment, in order to achieve high dispersion stability of the pigment a in the solvent, the mass ratio of the pigment dispersion resin b to the pigment a is 0.5 or more. Further, in the ink according to this embodiment, in order to ensure sufficient dispersion stability, the mass ratio of the pigment dispersion resin b to the pigment a is 1.1 or less.

### (Surfactant c)

In the ink according to this embodiment, the surfactant c represented by the following general formula (1) is used. The surfactant c has a propyleneoxide chain (PO chain) forming the central portion and ethyleneoxide chains (EO chains) located on both sides of the PO chain. 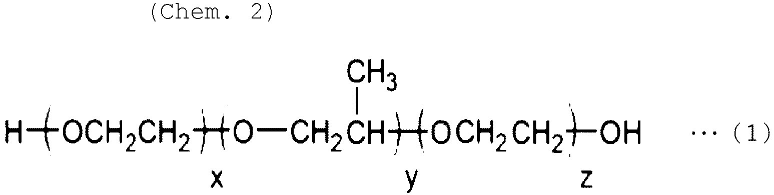 (In the general formula (1), **x, y,** and z each represent an integer determined such that the ratio (hereinafter, referred to simply also as **"a** ratio of the PO chain") of the number average molecular weight of the PO chains in the surfactant c to the number average molecular weight of the surfactant c is 0.85 or more and 0.91 or less)

In the ink according to this embodiment, by setting the ratio of the PO chain in the surfactant c to 0.85 or more to increase the ratio of the PO chain that is a hydrophobic segment and making the surfactant c have relatively high hydrophobicity, it is possible to improve the wet-spreading property on the recording medium. Further, in the surfactant c, by keeping the ratio of the PO chain that is a hydrophobic segment to 0.91 or less, it is possible to ensure solubility in water. Further, in the ink according to this embodiment, the EO chain that is a hydrophilic segment in the surfactant c contributes to improving the dispersion stability of the pigment a in the solvent.

Further, in the ink according to this embodiment, in order to achieve a high wet-spreading property, the surfactant c favorably has a number average molecular weight of 1900 or more. Further, in the ink according to this embodiment, in order to achieve high dispersion stability, the surfactant c has a number average molecular weight of 3000 or less.

In the ink according to this embodiment, in order to sufficiently achieve the above effect of the surfactant c, the content of the surfactant c is favorably 0.5 mass% or more. Further, in the ink according to this embodiment, in order to achieve high dispersion stability, the content of the surfactant c is favorably 1.1 mass% or less. Note that in this embodiment, the number average molecular weight is measured using gel permeation chromatography ("HLC-8020GPC" manufactured by TOSOH CORPORATION) in accordance with the following conditions.
·Column: "TSKgel SuperMultiporeHZ-H" manufactured by TOSOH CORPORATION (semi-microcolumn of 4.6 mm I.D. × 15 cm)
·Number of columns: 3
·Eluent: tetrahydrofuran
·Flow rate: 0.35 mL/min
·Sample injection amount: 10 µL
·Measurement temperature: 40°C
·Detector: IR detector
Note that the calibration curve is created by selecting seven types, i.e., F-40, F-20, F-4, F-1, A-5000, A-2500, and A-1000, and n-propylbenzene from TSKgel standard polystyrene manufactured by TOSOH CORPORATION.

### (Water-soluble moisturizing agent d)

In the ink according to this embodiment, since the above effect of the surfactant c allows the wet-spreading property on the recording medium to be improved, there is little need to use a solvent having high hydrophobicity as the water-soluble moisturizing agent d. For this reason, in the ink according to this embodiment, the dispersion stability of the pigment a in the solvent is less likely to be impaired due to the influence of the water-soluble moisturizing agent d.

In the ink according to this embodiment, a diol having 3 or more and 5 or less carbon atoms is used as the water-soluble moisturizing agent d. In the ink according to this embodiment, by setting the number of carbon atoms in the diol used as the water-soluble moisturizing agent d to 3 or more, a high wet-spreading property on the recording medium is achieved. Further, in the ink according to this embodiment, by keeping the number of carbon atoms of the diol used as the water-soluble moisturizing agent d to 5 or less, it is possible to ensure dispersion stability in the solvent.

Examples of the diol having 3 carbon atoms include propylene glycol and 1,3-propanediol. Examples of the diol having 4 carbon atoms include 1,2-butanediol, 1,3-butanediol, 1,4-butanediol, and 2,3-butanediol. Examples of the diol having 5 carbon atoms include 1,2-pentanediol, 1,3-pentanediol, 1,4-pentanediol, 1,5-pentanediol, 2,3-pentanediol, 2,4-pentanediol, 2,5-pentanediol, and 3,4-pentanediol.

Further, in the ink according to this embodiment, from the viewpoint of ensuring a wet-spreading property on the recording medium, the water-soluble moisturizing agent d has a log Kow of -1.6 or more. Further, in the water-soluble moisturizing agent d, from the viewpoint of ensuring solubility in water, the log Kow is favorably 0.7 or less. The log Kow is a water/octanol coefficient. The log Kow values in the present disclosure are values calculated using Hansen Solubility Parameter in Practice (HSPiP) software.

In the ink according to this embodiment, in order to sufficiently achieve the above effect of the water-soluble moisturizing agent d, the content of the water-soluble moisturizing agent d is favorably 30 mass% or more. Further, in the ink according to this embodiment, in order to achieve a high ejection property, the content of the water-soluble moisturizing agent d is favorably 60 mass% or less.

### (Water)

In the ink according to this embodiment, ion exchanged water, purified water, distilled water, or the like can be used as water. In the ink according to this embodiment, from the viewpoints of dryness and ejection reliability, the content of water is favorably 30 mass% or more and 60 mass% or less.

### (Other components)

In the ink according to this embodiment, components other than the above may be blended as necessary. For example, in the ink according to this embodiment, various additives such as a penetrating agent, a dissolution stabilizer, an anti-drying agent, an antioxidant, a viscosity adjustor, a pH adjuster, a neutralizer, and an antifungal agent may be blended as necessary.

### [Examples]

Inks were prepared and evaluated as Examples 1 to 3 of the present disclosure.

### (Evaluation of ink)

First, a method of evaluating the ink common to Examples 1 to 3 will be described. As the evaluation of the inks prepared in Examples 1 to 3, the wet-spreading property and dispersion stability were evaluated.

### ·Method of evaluating wet-spreading property

In the evaluation of wet-spreading property, an inkjet recording apparatus (line type, manufactured by KYOCERA Document Solutions Inc.) was used as a tester and copy paper ("Color Copy A4 90 g/m²" manufactured by Mondi plc) was used as a recording medium. Using the tester, the drive voltage was set such that the amount of ink to be ejected from one recording head was 11 pL and an image of 10 straight lines (one-dot lines) was formed on the recording medium.

For each of the 10 straight lines appearing as an image on the recording medium dried overnight after forming the image, the line width was measured by application measurement (line measurement) of an optical microscope ("MM-800" manufactured by Nikon Corporation), and the average value of the line widths of the 10 straight lines was used as an evaluation value for the wet-spreading property of each ink. Regarding the wet-spreading property, inks with the evaluation value of 75 µm or more are evaluated to "Pass", and inks with the evaluation value of less than 75 µm are evaluated to "Fail".

### ·Method of evaluating dispersion stability

In the evaluation of dispersion stability, the particle size before and after drying treatment was measured for the pigment dispersion that is a complex of the pigment a on which the pigment dispersion resin b was adsorbed. In the drying treatment, 10 g of the ink was placed in IBOY, and the solvent component was evaporated until the ink in the I-boy was reduced to 6 g. The ratio of the change in particle size of the pigment dispersion before and after drying treatment to the particle size of the pigment dispersion before drying treatment was calculated. The calculated ratio was used as an evaluation value for the dispersion stability of each ink. Using the evaluation value for the dispersion stability of each ink, evaluation was performed in accordance with the following criteria A and B. Inks with the evaluation for the dispersion stability of A are evaluated to "Pass", and inks with the evaluation of B are evaluated to "Fail".
A (Good): 10% or less
B (Poor): exceeding 10%

### (Example 1)

In Example 1, ink samples 1 to 10 were prepared. For the preparation of the ink samples 1 to 10 according to Example 1, a pigment dispersion liquid including the pigment a dispersed in water was prepared first. The pigment dispersion liquid was prepared by blending the pigment a, the pigment dispersion resin b, sodium hydroxide, OLFINE (registered trademark) E1010, and water such that the content shown in Table 1 was achieved.

**(Table 1)**

| Component | Content (mass%) |
|---|---|
| Pigment a | 15 |
| Pigment dispersion resin b | 9.0 |
| Sodium hydroxide | 0~1.0 |
| OLFINE E1010 | 0.5 |
| Water | Remainder |

Sodium hydroxide was blended as a neutralizer for neutralizing the pigment dispersion resin b. OLFINE (registered trademark) E1010 is blended as a dispersant for enhancing the dispersibility of the pigment a in the solvent and a nonionic surfactant manufactured by Nissin Chemical Co., Ltd. In all of the ink samples 1 to 10 according to Example 1, Pigment Blue 15:3 ("LIONOL BLUE FG-7351" manufactured by Toyocolor Co., Ltd.) was used as the pigment a and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. The grain size distribution of the pigment dispersion was measured using "Zetasizer Nano" manufactured by Sysmex Corporation with a diluted solution of the pigment dispersion liquid diluted 300 times with ion exchanged water.

Next, the ink samples 1 to 10 according to Example 1 were prepared. Each of the samples 1 to 10 was prepared by blending the above pigment dispersion liquid, the surfactant c, the water-soluble moisturizing agent d, triethylene glycol monobutyl ether, and water such that the content shown in Table 2 was achieved. In all of the samples 1 to 10, a benzylmethacrylate (BzMMA)/methacrylic acid (MAA) copolymer (BzMMA: 64 mass%, MAA: 36 mass%, the acid value: 160 mg KOH/g) was used as the pigment dispersion resin b, and 1,3-propanediol was used as the water-soluble moisturizing agent d. Further, triethylene glycol monobutyl ether was blended as a viscosity adjustor.

**(Table 2)**

| Component | Content (mass%) |
|---|---|
| Pigment dispersion liquid | 53.3 |
| Surfactant c | 0.5 |
| Water-soluble moisturizing agent d | 30 |
| Triethylene glycol monobutyl ether | 3 |
| Water | Remainder |

In the preparation of the ink samples 1 to 10 according to Example 1, the components shown in Table 2 were added in order while stirring the solvent using a stirrer. Further, each ink after stirring was filtered using a filter having a pore size of φ5 µm to remove foreign substances, dirt, coarse particles, and the like.

In the ink samples 1 to 10 according to Example 1, various different surfactants c were used. Specifically, in the sample 1, "NEWPOL PE-61" manufactured by SANYO CHEMICAL INDUSTRIES, LTD. was used as the surfactant c. In the sample 2, "NEWPOL PE-71" manufactured by SANYO CHEMICAL INDUSTRIES, LTD. was used as the surfactant c. In the sample 3, "ADEKA Pluronic L-31" manufactured by ADEKA CORPORATION was used as the surfactant c. In the sample 4, "ADEKA Pluronic L-61" manufactured by ADEKA CORPORATION was used as the surfactant c. In the sample 5, "ADEKA Pluronic L-81" manufactured by ADEKA CORPORATION was used as the surfactant c. In the sample 6, "NEWPOL PE-62" manufactured by SANYO CHEMICAL INDUSTRIES, LTD. was used as the surfactant c. In the sample 7, "NEWPOL PE-34" manufactured by SANYO CHEMICAL INDUSTRIES, LTD. was used as the surfactant c. In the sample 8, "NEWPOL PE-64" manufactured by SANYO CHEMICAL INDUSTRIES, LTD. was used as the surfactant c. In the sample 9, "NEWPOL PE-74" manufactured by SANYO CHEMICAL INDUSTRIES, LTD. was used as the surfactant c. In the sample 10, polypropylene glycol was used as the surfactant c.

Table 3 shows the number average molecular weight, the number average molecular weight of the PO chain, and the ratio of the PO chain of the surfactant c used in the samples 1 to 10, and the evaluation results of the wet-spreading property and dispersion stability for the samples 1 to 10. In all of the samples 1 to 4, favorable evaluation results for both wet-spreading property and dispersion stability were obtained. On the other hand, in all of the samples 5 to 9 in which the ratio of the PO chain in the surfactant c is low, the wet-spreading property was evaluated to "Fail". This is presumably because in the samples 5 to 9, the wettability was insufficient due to the too low hydrophobicity of the surfactant c. Further, in the sample 10 in which the surfactant c includes only the PO chain, the surfactant c was not dissolved in the solvent, so that evaluation could not be performed. This is presumably because in the sample 10, the solubility in water was insufficient due to too high hydrophobicity.

**(Table 3)**

| No. | Surfactant c | | | Evaluation result | |
|---|---|---|---|---|---|
| | Entire number average molecular weight | Number average molecular weight of PO chain | PO chain ratio | Wet-spreading property (*µ*m) | Dispersion stability |
| 1 | 2,000 | 1,750 | 0.88 | 78 | A |
| 2 | 2,200 | 2,000 | 0.91 | 79 | A |
| 3 | 1,100 | 950 | 0.86 | 77 | A |
| 4 | 2,000 | 1,750 | 0.88 | 76 | A |
| 5 | 2,750 | 2,250 | 0.82 | 73 | A |
| 6 | 2,400 | 1,750 | 0.73 | 73 | A |
| 7 | 1,700 | 1,000 | 0.59 | 73 | A |
| 8 | 3,100 | 1,750 | 0.56 | 72 | A |
| 9 | 3,100 | 2,000 | 0.65 | 71 | A |
| 10 | 2,000 | 2,000 | 1.00 | - | - |

### (Example 2)

In Example 2, ink samples 11 to 15 were prepared. For the preparation of the ink samples 11 to 15 according to Example 2, a pigment dispersion liquid including the pigment a dispersed in water was prepared first. The pigment dispersion liquid was prepared by blending the pigment a, the pigment dispersion resin b, sodium hydroxide, OLFINE (registered trademark) E1010, and water such that the content shown in Table 4 was achieved. Note that the content of the pigment dispersion resin b was determined for each of the samples 11 to 15 in accordance with the ratio to the pigment a.

**(Table 4)**

| Component | Content (mass%) |
|---|---|
| Pigment a | 15 |
| Pigment dispersion resin b | Determine in accordance with ratio to pigment a |
| Sodium hydroxide | 0~1.0 |
| OLFINE E1010 | 0.5 |
| Water | Remainder |

Sodium hydroxide was blended as a neutralizer for neutralizing the pigment dispersion resin b. OLFINE (registered trademark) E1010 is blended as a dispersant for enhancing the dispersibility of the pigment a in the solvent and a nonionic surfactant manufactured by Nissin Chemical Co., Ltd. In all of the ink samples 11 to 15 according to Example 2, Pigment Blue 15:3 ("LIONOL BLUE FG-7351" manufactured by Toyocolor Co., Ltd.) was used as the pigment a and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. The grain size distribution of the pigment dispersion was measured using "Zetasizer Nano" manufactured by Sysmex Corporation with a diluted solution of the pigment dispersion liquid diluted 300 times with ion exchanged water.

Next, the ink samples 11 to 15 according to Example 2 were prepared. Each of the samples 11 to 15 was prepared by blending the above pigment dispersion liquid, the surfactant c, the water-soluble moisturizing agent d, triethylene glycol monobutyl ether, and water such that the content shown in Table 5 was achieved. In all of the samples 11 to 15, a benzylmethacrylate (BzMMA)/methacrylic acid (MAA) copolymer (BzMMA: 64 mass%, MAA: 36 mass%, the acid value: 160 mg KOH/g) was used as the pigment dispersion resin b, "ADEKA Pluronic L-61" manufactured by ADEKA CORPORATION was used as the surfactant c, and 1,3-propanediol was used as the water-soluble moisturizing agent d. Further, triethylene glycol monobutyl ether was blended as a viscosity adjustor.

**(Table 5)**

| Component | Content (mass%) |
|---|---|
| Pigment dispersion liquid | 53.3 |
| Surfactant c | 0.5 |
| Water-soluble moisturizing agent d | 30 |
| Triethylene glycol monobutyl ether | 3 |
| Water | Remainder |

In the preparation of the ink samples 11 to 15 according to Example 2, the components shown in Table 5 were added in order while stirring the solvent using a stirrer. Further, each ink after stirring was filtered using a filter having a pore size of φ5 µm to remove foreign substances, dirt, coarse particles, and the like.

In the ink samples 11 to 15 according to Example 2, the blending amount of the pigment dispersion resin b was adjusted to vary the mass ratio of the pigment dispersion resin b to the pigment a.

Table 6 shows the mass ratio of the pigment dispersion resin b to the pigment a in the samples 11 to 15, and the evaluation results of wet-spreading property and dispersion stability for the samples 11 to 15. In all of the samples 12 to 15, favorable evaluation results for both wet-spreading property and dispersion stability were obtained. On the other hand, in the samples 11 in which the mass ratio of the pigment dispersion resin b to the pigment a is low, the wet-spreading property and dispersion stability were evaluated to "Fail". This is presumably because in the sample 11, the effect of the pigment dispersion resin b could not be sufficiently achieved.

**(Table 6)**

| No. | Mass ratio of pigment dispersion resin b to pigment a | Evaluation result | |
|---|---|---|---|
| | | Wet-spreading property (*µ*m) | Dispersion stability |
| 11 | 0.45 | 73 | B |
| 12 | 0.5 | 76 | A |
| 13 | 0.7 | 77 | A |
| 14 | 1.0 | 78 | A |
| 15 | 1.1 | 79 | A |

### (Example 3)

In Example 3, ink samples 16 to 23 were prepared. For the preparation of the ink samples 16 to 23 according to Example 3, a pigment dispersion liquid including the pigment a dispersed in water was prepared first. The pigment dispersion liquid was prepared by blending the pigment a, the pigment dispersion resin b, sodium hydroxide, OLFINE (registered trademark) E1010, and water such that the content shown in Table 7 was achieved.

**(Table 7)**

| Component | Content (mass%) |
|---|---|
| Pigment a | 15 |
| Pigment dispersion resin b | 6.0 |
| Sodium hydroxide | 0~1.0 |
| OLFINE E1010 | 0.5 |
| Water | Remainder |

Sodium hydroxide was blended as a neutralizer for neutralizing the pigment dispersion resin b. OLFINE (registered trademark) E1010 is blended as a dispersant for enhancing the dispersibility of the pigment a in the solvent and a nonionic surfactant manufactured by Nissin Chemical Co., Ltd. In all of the ink samples 16 to 23 according to Example 3, Pigment Blue 15:3 ("LIONOL BLUE FG-7351" manufactured by Toyocolor Co., Ltd.) was used as the pigment a and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. The grain size distribution of the pigment dispersion was measured using "Zetasizer Nano" manufactured by Sysmex Corporation with a diluted solution of the pigment dispersion liquid diluted 300 times with ion exchanged water.

Next, the ink samples 16 to 23 according to Example 3 were prepared. Each of the samples 16 to 23 was prepared by blending the above pigment dispersion liquid, the surfactant c, the water-soluble moisturizing agent d, triethylene glycol monobutyl ether, and water such that the content shown in Table 8 was achieved. In all of the samples 16 to 23, a benzylmethacrylate (BzMMA)/methacrylic acid (MAA) copolymer (BzMMA: 64 mass%, MAA: 36 mass%, the acid value: 160 mg KOH/g) was used as the pigment dispersion resin b, and "ADEKA Pluronic L-61" manufactured by ADEKA CORPORATION was used as the surfactant c. Further, triethylene glycol monobutyl ether was blended as a viscosity adjustor.

**(Table 8)**

| Component | Content (mass%) |
|---|---|
| Pigment dispersion liquid | 53.3 |
| Surfactant c | 0.7 |
| Water-soluble moisturizing agent d | 25 |
| Triethylene glycol monobutyl ether | 5 |
| Water | Remainder |

In the preparation of the ink samples 16 to 23 according to Example 3, the components shown in Table 8 were added in order while stirring the solvent using a stirrer. Further, each ink after stirring was filtered using a filter having a pore size of φ5 µm to remove foreign substances, dirt, coarse particles, and the like.

In the ink samples 16 to 23 according to Example 3, various different water-soluble moisturizing agents d were used.

Table 9 shows the material name and log Kow of the water-soluble moisturizing agent d used in the samples 16 to 23, and the evaluation results of wet-spreading property and dispersion stability for the samples 16 to 23. In all of the samples 18 to 22 in which the number of carbon atoms of the water-soluble moisturizing agent d is 3, favorable evaluation results for both wet-spreading property and dispersion stability were obtained. On the other hand, in the sample 16 in which the water-soluble moisturizing agent d is a triol and the samples 17 in which the number of carbon atoms of the water-soluble moisturizing agent d is 2, the wet-spreading property was evaluated to "Fail". This is presumably because in the samples 16 and 17, the wettability was insufficient due to the too low hydrophobicity of the water-soluble moisturizing agent d. Further, in the sample 23 in which the number of carbon atoms of the water-soluble moisturizing agent d is 6, the dispersion stability was evaluated to "Fail". This is presumably because the pigment a agglomerated due to the too high hydrophobicity of the water-soluble moisturizing agent d.

**(Table 9)**

| No. | Water-soluble moisturizing agent d | | Evaluation result | |
|---|---|---|---|---|
| | Material name | log Kow | Wet-spreading property (*µ*m) | Dispersion stability |
| 16 | Glycerin triol | -1.76 | 73 | A |
| 17 | Ethylene glycol | -1.75 | 73 | A |
| 18 | Propylene glycol | -1.53 | 77 | A |
| 19 | 1,3-propanediol | -1.47 | 78 | A |
| 20 | 1,3-butanediol | -1.46 | 79 | A |
| 21 | 2,3-butanediol | -1.36 | 77 | A |
| 22 | 1,5-pentanediol | 0.35 | 77 | A |
| 23 | 1,2-hexanediol | 0.44 | 77 | B |

## Claims

1. An inkjet ink, comprising:
a pigment;
a pigment dispersion resin;
a surfactant represented by the following general formula (1);
a diol having 3 or more and 5 or less carbon atoms;
and
water,
a mass ratio of the pigment dispersion resin to the pigment being 0.5 or more and 1.1 or less: 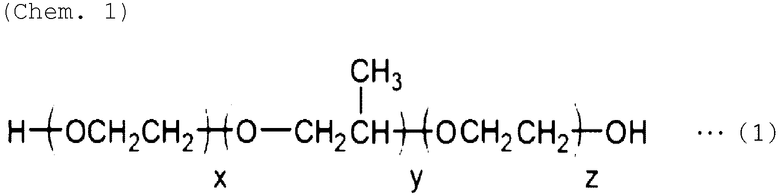 (wherein, in the general formula (1), x, y, and z each represent an integer determined such that a ratio of a number average molecular weight of only propyleneoxide chains in the surfactant to a number average molecular weight of the surfactant is 0.85 or more and 0.91 or less).

2. The inkjet ink according to claim 1, wherein
the number average molecular weight of the surfactant is 1,900 or more and 3,000 or less.

3. The inkjet ink according to claim 1, wherein
the diol has a log Kow of -1.6 or more and 0.7 or less.
